# EUROPÄISCHE PATENTSCHRIFT

(11) **EP 1 403 226 B1**
(45) Veröffentlichungstag und Bekanntmachung des Hinweises auf die Patenterteilung: **11.01.2006**
(21) Anmeldenummer: 02020834.4
(22) Anmeldetag: 18.09.2002
(51) Int. Cl.: C04B 26/04, C04B 26/06, C09D 5/02

(54) **Zementfreie Bodenbeschichtungsmischung**
Cement-free floor coating composition
Revêtement de sol sans ciment

(43) Veröffentlichungstag der Anmeldung: 31.03.2004
(73) Patentinhaber: Remmers Baustofftechnik GmbH, D-49624 Löningen (DE)
(72) Erfinder: Leimer, Hans Joachim, 55129 Mainz (DE); Lohmann, Thomas, Dr., 68526 Ladenburg (DE); Reul, Klaus, 41812 Erkelenz (DE)
(74) Vertreter: Siekmann, Gunnar

(56) Entgegenhaltungen:
- EP-A- 0 199 921
- DE-A- 2 364 398
- DE-A- 4 421 970
- DE-B- 2 532 673
- DE-U- 29 623 574
- GB-A- 966 864
- GB-A- 975 587

## Beschreibung

Die Erfindung betrifft eine zementfreie Bodenbeschichtungsmischung. - Bodenbeschichtungsmischung meint eine Mischung zur Beschichtung von Bodenflächen, insbesondere von befahrbaren Bodenflächen. Mit der erfindungsgemäßen Bodenbeschichtungsmischung werden vor allem mineralische Bodenflächen, beispielsweise aus Beton oder Estrich beschichtet. Es liegt im Rahmen der Erfindung, mit der Bodenbeschichtungsmischung insbesondere Betonbodenflächen bzw. zementgebundene Böden zu beschichten. Die erfindungsgemäße Bodenbeschichtungsmischung eignet sich vor allem zur Bodenbeschichtung von Parkhäusern, Garagen, befahrbaren Brücken und anderen Bodenflächen, die mit Kraftfahrzeugverkehr beaufschlagt werden.

Aus der Praxis sind Bodenbeschichtungsmischungen bekannt, die aus Reaktionsharzen oder Zement/Kunststoffdispersionen bestehen. Diese Mischungen sind für die Beschichtung der Böden von Parkhäusern, Garagen und dergleichen bestimmt und sollen Risse und andere Beschädigungen in den Bodenflächen überbrücken. Durch die Beschichtung soll eine beschädigungsfreie Oberfläche erzeugt werden, die ein Eindringen von korrosiven Medien in die Bodenflächen verhindert. Wenn die bekannten Bodenbeschichtungsmischungen unter anderem einen beachtlichen Anteil Zement enthalten, resultieren nach dem Aufbringen und Trocknen bzw. Aushärten dieser Mischungen oftmals störende Unregelmäßigkeiten, wie beispielsweise Unebenheiten in den Flächen. An manchen Stellen sind die ausgehärteten Beschichtungen nur wenig mechanisch belastbar bzw. bei höheren mechanischen Belastungen sind unerwünschte Beschädigungen die Folge. Diese Nachteile sind vermutlich darauf zurückzuführen, dass beim Trocknen der bekannten zementhaltigen Bodenbeschichtungsmischungen der Wasseraustritt ungleichmäßig bzw. unkontrolliert erfolgt. Bei dieser Bodenbeschichtung wird in der Regel vor dem Trocknen der Beschichtung in aufwendiger Weise ein grobkörniges Füllmaterial, normalerweise Sand, aufgestreut. Auch die Bodenbeschichtung mit Reaktionsharzen ist relativ aufwendig. Vor Aufbringen dieser Beschichtungen müssen stets zumindest zwei Komponenten gemischt werden und anschließend muss die auf den Untergrund aufgetragene Beschichtung ebenfalls mit Sand abgestreut werden. Die danach erforderliche Entfernung von überschüssigem Sand ist ebenfalls aufwendig. Nachteilhaft ist weiterhin, dass Bodenbeschichtungsmischungen auf Basis von Reaktionsharzen häufig nur relativ langsam trocknen. Fernerhin sind solche Bodenbeschichtungsmischungen bei tieferen Temperaturen nicht oder nur schwierig zu verarbeiten. - Häufig sind die mit den bekannten Mischungen hergestellten Bodenbeschichtungen auch gegenüber größeren Temperaturschwankungen nur wenig resistent.

Dokument GB966864 offenbart eine Beschichtung umfassend eine kunstharzkomponente, Silan-Haftvermittler, sowie ein Füll stoffsystem mit eines groben und einer feinen Sand fraktion.

Demgegenüber liegt der Erfindung das technische Problem zu Grunde, eine Bodenbeschichtungsmischung anzugeben, die nach dem Trocknen bzw. Aushärten eine ebene störstellenfreie Bodenbeschichtung gewährleistet, die gegenüber mechanischen Beanspruchungen ausreichend resistent ist, mit der eine einfache und wenig aufwendige Beschichtung möglich ist und mit der alle oben geschilderten Nachteile vermieden werden.

Zur Lösung dieses technischen Problems lehrt die Erfindung eine zementfreie Bodenbeschichtungsmischung gemäß Anspruch 1. - Von besonderer Bedeutung ist im Rahmen der Erfindung, dass die erfindungsgemäße Bodenbeschichtungsmischung zementfrei ist. Zementfrei meint hier, dass die Bodenbeschichtungsmischung weniger als 2 Gew.-%, vorzugsweise weniger als 1 Gew.-%, bevorzugt weniger als 0,5 Gew.-%, sehr bevorzugt weniger als 0,2 Gew.-% Zement enthält. Zweckmäßigerweise ist die erfindungsgemäße Bodenbeschichtungsmischung frei von anorganischen Bindemitteln. Frei von anorganischen Bindemitteln meint vorzugsweise, dass die Bodenbeschichtungsmischung weniger als 2 Gew.-%, bevorzugt weniger als 1 Gew.-% an anorganischen Bindemitteln enthält. Dass der feinteilige Füllstoff eine Korngröße bis 500 µm aufweist, meint insbesondere, dass zumindest 90 Gew.-% des feinteiligen Füllstoffes eine Korngröße bis 500 µm aufweisen. Dass der grobkörnige Füllstoff eine Körngröße größer als 0,6 mm aufweist meint insbesondere, dass zumindest 90 Gew.-% des grobkörnigen Füllstoffes eine Korngröße größer als 0,6 mm aufweisen. Die genannten 90 Gew.-% beziehen sich jeweils auf die Gesamtmenge des eingesetzten feinteiligen bzw. grobkörnigen Füllstoffes. - Die beanspruchte Bodenbeschichtungsmischung bezieht sich im Übrigen auf die verarbeitungsfähige, flüssige bzw. mehr oder weniger zähflüssige Mischung vor dem Auftragen bzw. vor dem Trocknen/Aushärten. Die hier aufgeführten Gew.-%-Angaben beziehen sich also stets auf diese verarbeitungsfähige noch nicht getrocknete Mischung vor dem Aufbringen auf den Untergrund bzw. auf die zu beschichtende Bodenfläche.

Die erfindungsgemäße Bodenbeschichtungsmischung eignet sich insbesondere zur Bodenbeschichtung von befahrbaren Flächen. Hierbei handelt es sich vor allem um Bodenflächen von Parkhäusern, Garagen, Brücken und dergleichen. Nach sehr bevorzugter Ausführungsform der Erfindung wird die erfindungsgemäße Bodenbeschichtungsmischung zur Bodenbeschichtung von nicht frei bewitterten befahrbaren Flächen eingesetzt, also zur Bodenbeschichtung von Parkhäusern, Garagen und anderen überdachten befahrbaren Flächen.

Die erfindungsgemäße Bodenbeschichtungsmischung wird vorzugsweise auf einen mineralischen Untergrund, insbesondere auf zementgebundene Böden bzw. auf Betonflächen oder Estrichflächen aufgebracht. Dabei liegt es im Rahmen der Erfindung, dass vor dem Auftragen der erfindungsgemäßen Bodenbeschichtungsmischung eine Grundierung auf den Untergrund aufgebracht wird. Bei dieser Grundierung kann es sich um eine Kunstharzdispersion, beispielsweise eine Acrylat-dispersion oder Styrol-Acrylat-Dispersion handeln. Es liegt aber auch im Rahmen der Erfindung, dass die Grundierung aus einem Reaktionsharz, beispielsweise aus einem Epoxidharz besteht. Auf die Grundierung wird dann die erfindungsgemäße Bodenbeschichtungsmischung aufgetragen. Nach bevorzugter Ausführungsform der Erfindung wird eine Versiegelungsschicht auf die erfindungsgemäße Bodenbeschichtung aufgebracht. Die Versiegelungsschicht kann beispielsweise mit Hilfe einer Kunstharzdispersion, einem Epoxidharz oder einem Polyurethan oder dergleichen verwirklicht werden.

Vorzugsweise wird für die erfindungsgemäße Bodenbeschichtungsmischung eine 50 bis 70 Gew.-%ige Kunstharzdispersion verwendet (50 bis 70 Gew.-% Kunstharz, Rest Flüssigkeit). Zweckmäßigerweise handelt es sich um eine wässrige Kunstharzdispersion (50 bis 70 Gew.-% Kunstharz). Nach bevorzugter Ausführungsform der Erfindung ist die Kunstharzdispersion für die Bodenbeschichtungsmischung eine acrylathaltige Dispersion. Zweckmäßigerweise wird eine Acrylatdispersion und/oder eine Styrol-Acrylat-Dispersion eingesetzt, wenn die ausgehärtete Beschichtung zum Zwecke der Rissüberbrückung eine Restflexibilität aufweisen soll. Es liegt aber auch im Rahmen der Erfindung, andere Dispersionen, wie z. B. eine Styrol-Butadien-Dispersion und/oder eine Vinylpropionat-Dispersion und/oder eine Vinylacetat-Dispersion einzusetzen, um die Eigenschaften der Beschichtung gezielt zu beeinflussen.

Eine sehr bevorzugte Ausführungsform ist dadurch gekennzeichnet, dass 20 bis 45 Gew.-%, vorzugsweise 22 bis 39 Gew.-% Kunstharzdispersion in der Bodenbeschichtungsmischung enthalten sind. Zweckmäßigerweise enthält die Bodenbeschichtungsmischung 26 bis 36 Gew.-%, bevorzugt 28 bis 33 Gew.-% Kunstharzdispersion. Nach sehr bevorzugter Ausführungsform der Erfindung sind in der Bodenbeschichtungsmischung 16 bis 40 Gew.-%, vorzugsweise 20 bis 36 Gew.-% feinteiliger Füllstoff enthalten. Zweckmäßigerweise enthält die Bodenbeschichtungsmischung 23 bis 33 Gew.-%, bevorzugt 25 bis 31 Gew.-% an feinteiligem Füllstoff. Eine sehr bevorzugte Ausführungsform der Erfindung ist dadurch gekennzeichnet, dass die Bodenbeschichtungsmischung 25 bis 60 Gew.-%, vorzugsweise 28 bis 56 Gew.-% grobkörnigen Füllstoff enthält. Zweckmäßigerweise sind 32 bis 50 Gew.-%, bevorzugt 34 bis 48 Gew.-%, sehr bevorzugt 38 bis 45 Gew.-% des grobkörnigen Füllstoffes in der Bodenbeschichtungsmischung enthalten.

Es liegt im Rahmen der Erfindung, dass die Kunstharzdispersion mit dem feinteiligen Füllstoff und mit dem grobkörnigen Füllstoff und ggf. mit weiteren Komponenten vor dem Auftragen zur verarbeitungsfähigen Bodenbeschichtungsmischung gemischt werden. Die genannten Bestandteile werden also zweckmäßigerweise vor dem Auftragen auf den Boden bzw. Untergrund zur verarbeitungsfähigen Bodenbeschichtungsmischung gemischt und nicht erst beim Auftragen oder nach dem Auftragen einzelner Bestandteile miteinander vermischt. Dabei können die genannten Komponenten grundsätzlich erst unmittelbar vor Ort gemischt werden und dann als Mischung auf den Untergrund aufgebracht werden. Vorzugsweise werden die Komponenten der erfindungsgemäßen Bodenbeschichtungsmischung bereits vorab werksmäßig gemischt und als Mischung in den Handel gebracht. Es liegt dann also bereits vor Ort eine gebrauchsfertige Mischung vor und ein Mischen vor Ort kann entfallen. Die verarbeitungsfähige Bodenbeschichtungsmischung enthält zumindest einen Haftvermittler. Auch der Haftvermittler wird dabei zweckmäßigerweise mit den anderen Komponenten vor dem Auftragen der Mischung auf den Untergrund zur verarbeitungsfähigen Bodenbeschichtungsmischung gemischt. Haftvermittler ist zumindest eine Substanz aus der Gruppe "Silan, Siloxan, Silicon". Eine bevorzugte Ausführungsform der Erfindung ist dadurch gekennzeichnet, dass 0,15 bis 1,5 Gew.-%, vorzugsweise 0,2 bis 1 Gew.-% des Haftvermittlers in der Bodenbeschichtungsmischung enthalten sind. Zweckmäßigerweise enthält die Bodenbeschichtungsmischung 0,2 bis 0,5 Gew.-%, vorzugsweise 0,22 bis 0,35 Gew.-% zumindest eines Haftvermittlers. Der Haftvermittler kann im Übrigen auch durch damit bereits behandelte Füllstoffe in die Mischung eingebracht werden.

Eine sehr bevorzugte Ausführungsform der Erfindung ist dadurch gekennzeichnet, dass es sich bei dem feinteiligen Füllstoff um einen quarzitischen Füllstoff handelt. Vorzugsweise wird ein siliciumdioxidhaltiger feinteiliger Füllstoff verwendet. Nach sehr bevorzugter Ausführungsform, der im Rahmen der Erfindung ganz besondere Bedeutung zukommt, handelt es sich bei dem feinteiligen Füllstoff um Quarzmehl. Zweckmäßigerweise bestehen zumindest 50 Gew.-%, vorzugsweise zumindest 65 Gew.-%, bevorzugt zumindest 75 Gew.-% und sehr bevorzugt zumindest 90 Gew.-% des feinteiligen Füllstoffes (bezogen auf die Gesamtmenge des feinteiligen Füllstoffes) aus Quarzmehl. Nach bevorzugter Ausführungsform enthält die erfindungsgemäße Bodenbeschichtungsmischung kein Talkum, keine Flugasche und kein Gips. Zweckmäßigerweise enthält die Bodenbeschichtungsmischung weniger als 20 Gew.-%, vorzugsweise weniger als 15 Gew.-%, bevorzugt weniger als 10 Gew.-%, sehr bevorzugt wengier als 5 Gew.-% der genannten Füllstoffe (Talkum, Elugasche, Gips). Nach bevorzugter Ausführungsform sind weniger als 2 Gew.-%, bevorzugt weniger als 1 Gew.-% dieser Füllstoffe enthalten. - Zweckmäßigerweise weist der erfindungsgemäß eingesetzte feinteilige Füllstoff eine Korngröße bis 500 µm, vorzugsweise bis 450 µm, bevorzugt bis 400 µm auf.

Es liegt im Rahmen der Erfindung, dass der grobkörnige Füllstoff eine Korngröße von 0,6 bis 2,2 mm, vorzugsweise von 0,7 bis 2 mm aufweist. Nach sehr bevorzugter Ausführungsform der Erfindung haben zumindest 90 Gew.-% des grobkörnigen Füllstoffes (bezogen auf die Gesamtmenge des grobkörnigen Füllstoffes) eine Korngröße von 0,7 bis 1,2 mm. Gemäß einer Ausführungsform, der im Rahmen der Erfindung ganz besondere Bedeutung zukommt, weisen 0,5 bis 10 Gew.-%, vorzugsweise 0,8 bis 8 Gew.-%, bevorzugt 1 bis 6 Gew.-% des grobkörnigen Füllstoffes (jeweils bezogen auf die Gesamtmenge des grobkörnigen Füllstoffes) eine deutlich höhere Korngröße, beispielsweise von 1,0 bis 1,6 mm auf. Insbesondere diese Teilmenge des grobkörnigen Füllstoffes mit höherer Korngröße trägt effektiv dazu bei, dass man eine gewisse gewünschte Rauhigkeit der Bodenbeschichtungsoberfläche erzielt. - Es liegt im Rahmen der Erfindung, dass es sich bei dem grobkörnigen Füllstoff um Sand handelt. Bei dem grobkörnigen Füllstoff kann es sich aber auch um ein anderes abriebfestes Abstreugut, beispielsweise um Granit handeln. Nach sehr bevorzugter Ausführungsform, der im Rahmen der Erfindung ganz besondere Bedeutung zukommt, wird als feinteiliger Füllstoff Quarzmehl und als grobkörniger Füllstoff Sand eingesetzt.

Vorzugsweise wird die erfindungsgemäße Bodenbeschichtungsmischung mit der Maßgabe auf einen Untergrund aufgebracht, dass die Dicke der Bodenbeschichtung nach der Trocknung bzw. Schrumpfung 1 bis 8 mm, vorzugsweise 1 bis 5 mm beträgt. Nach sehr bevorzugter. Ausführungsform beträgt die Dicke der erfindungsgemäßen Bodenbeschichtung nach ihrer Trocknung bzw. Schrumpfung 2 bis 4 mm.

Der Erfindung liegt die Erkenntnis zu Grunde, dass sich die erfindungsgemäße zementfreie Bodenbeschichtungsmischung hervorragend zur Beschichtung von Bodenflächen, insbesondere zur Beschichtung von befahrbaren, für Kraftfahrzeugverkehr geeigneten Bodenflächen eignet. Mit der erfindungsgemäßen Bodenbeschichtungsmischung kann eine Bodenbeschichtung erzeugt werden, mit der Risse und Beschädigungen im Untergrund, insbesondere in Böden aus Beton bzw. in zementgebundenen Böden einfach und effektiv überbrückt werden können. Insoweit zeichnet sich die mit der erfindungsgemäßen Bodenbeschichtungsmischung hergestellte Bodenbeschichtung durch hervorragende Überbrückungseigenschaften aus. Mit dieser Bodenbeschichtung kann effektiv verhindert werden, dass sich Risse und Beschädigungen im Untergrund ausbreiten. Fernerhin ist die erfindungsgemäß erzeugte Bodenbeschichtung eben und rissfrei und weist Störstellen bzw. unerwünschte Unebenheiten nicht auf. Nichtsdestoweniger kann bei Einhaltung der erfindungsgemäßen Lehre eine gewisse Oberflächenrauhigkeit der Beschichtungsoberfläche erhalten werden, die für befahrbare Flächen auch wünschenswert ist.

Von besonderer Bedeutung ist im Rahmen der Erfindung, dass die Komponenten der Mischung, insbesondere die Kunstharzdispersion, der feinteilige Füllstoff und der grobkörnige Füllstoff, vorzugsweise Sand, bereits vor dem Aufbringen auf den Untergrund als fertige Mischung vorliegen. Der grobkörnige Füllstoff, vorzugsweise Sand, ist also zweckmäßigerweise von vornherein in der Bodenbeschichtungsmischung enthalten und wird nicht erst nachträglich auf die bereits auf dem Untergrund befindliche Beschichtung aufgebracht. Im Gegensatz zu aus der Praxis bekannten Maßnahmen entfällt nach bevorzugter Ausführungsform der Erfindung also ein nachträgliches Zufügen von Sand und somit ein zusätzlicher aufwendiger Arbeitsschritt. Bei der erfindungsgemäßen Bodenbeschichtungsmischung handelt es sich somit um eine selbstabsandende Mischung. Selbstabsandende Bodenbeschichtungsmischung meint, dass der grobkörnige Füllstoff, vorzugsweise Sand, von vornherein, das heißt vor dem Aufbringen auf den Untergrund in der Mischung enthalten ist.

Es liegt fernerhin im Rahmen der Erfindung, dass die erfindungsgemäße Bodenbeschichtungsmischung lösemittelfrei ist. Lösemittelfrei meint entweder, dass die Bodenbeschichtungsmischung organische Lösemittel nicht enthält, oder dass weniger als 2 Gew.-%, vorzugsweise weniger als 1 Gew.-%, sehr bevorzugt weniger als 0,5 Gew.-% an organischen Lösemitteln in der Mischung enthalten sind. Von daher zeichnet sich die erfindungsgemäße Bodenbeschichtungsmischung auch durch eine besonders vorteilhafte Umweltverträglichkeit aus.

Die Bodenbeschichtungsmischung ist außerdem auch bei tieferen Temperaturen, beispielsweise bei +5°C und ggf. noch tieferen Temperaturen, problemlos verarbeitbar. Von besonderem Vorteil ist weiterhin, dass sich die erfindungsgemäße Bodenbeschichtung nach dem Aufbringen auf den Untergrund durch eine überraschend schnelle und nichtsdestoweniger gleichmäßige und kontrollierte Trocknung auszeichnet. Beim Trocknen schrumpft die Kunstharzdispersion auf den in der Mischung befindlichen Füllstoffpartikeln und bildet darauf an der Beschichtungsoberfläche gleichsam einen wirksamen Schutzfilm bzw. eine Schutzhaut und bindet die Partikel sicher ein. In Kombination damit tragen die in der Mischung enthaltenen grobkörnigen Partikel wirksam zu einer gewünschten Oberflächenrauhigkeit bei. Diese letztgenannten Vorteile lassen sich besonders effektiv verwirklichen, wenn nach bevorzugter Ausführungsform der Erfindung die feinteiligen und grobkörnigen Füllstoffe von Anfang an, d. h. vor dem Auftragen der Beschichtung in der Mischung gemischt sind.

Die mit der Bodenbeschichtungsmischung erzeugte Bodenbeschichtung stellt bezüglich des Untergrundes, insbesondere bezüglich Böden aus Beton oder zementgebundenen Böden eine sehr wirksame Schutzschicht dar und verhindert das Eindringen von Schmutz oder korrosiven Medien. Besonders hervorzuheben ist, dass die erfindungsgemäß hergestellte Bodenbeschichtung mechanisch überraschend resistent ist und insofern auch die erforderliche Festigkeit für ein Befahren mit Kraftfahrzeugen aufweist. Die mit der erfindungsgemäßen Bodenbeschichtungsmischung erzeugte Bodenbeschichtung haftet optimal auf dem Untergrund, vor allem auf Böden aus Beton oder auf zementgebundenen Böden. Von besonderer Bedeutung ist auch, dass für die erfindungsgemäße Bodenbeschichtung durch geeignete Wahl der Komponenten und Parameter eine gewisse Flexibilität eingestellt werden kann und insoweit Belastungen und Beanspruchungen effektiv gleichsam federnd aufgenommen werden können, ohne dass irgendwelche störenden Beschädigungen zurückbleiben. Durch Variation der Komponenten und Parameter ist aber auch ein starres System möglich.

Nachfolgend wird die Erfindung anhand eines Ausführungsbeispiels näher erläutert: 50 Gewichtsteile einer 60 Gew.-%igen wässrigen Acrylatdispersion (60 Gew.-% Acrylat bzw. Polyacrylat und 40 Gew.-% Wasser) wurden mit 45 Gewichtsteilen Quarzmehl (Korngröße kleiner als 300 µm) und 0,5 Gewichtsteilen eines Haftvermittlers gemischt. Der resultierenden Dispersion können wahlweise Additive, wie beispielsweise Konservierungsstoffe oder Rheologiemittel zugefügt werden. Die resultierende Dispersion wurde dann mit 70 Gewichtsteilen Sand mit einer Korngröße von 0,7 bis 1,2 mm gemischt. Die Mischung wurde auf eine befahrbare Betonfläche aufgebracht. Nach dem Trocknen ergab sich eine abgesandete Bodenbeschichtung mit einer Dicke von ca. 2,5 mm.

## Patentansprüche

1. Bodenbeschichtungsmischung aus zumindest einer wässerigen Kunstharzdispersion, zumindest einem feinteiligen Füllstoff mit einer Korngröße bis 500 µm, zumindest einem grobkörnigen Füllstoff mit einer Korngröße größer als 0,6 mm, und einem Haftvermittler, wobei der Haftvermittler zumindest eine Substanz aus der Gruppe "Silan, Siloxan, Silicon" ist, wobei die Bodenbeschichtungsmischung weniger als 2 Gew.-% Zement enthält.

2. Bodenbeschichtungsmischung nach Anspruch 1, wobei die Kunstharzdispersion eine acrylathaltige Dispersion ist und/oder zumindest eine Dispersion aus der Gruppe "Styrol-Butadien-Dispersion, vinylpropionathaltige Dispersion, vinylacetathaltige Dispersion" ist.

3. Bodenbeschichtungsmischung nach einem der Ansprüche 1 oder 2, wobei 20 bis 45 Gew.-%, vorzugsweise 22 bis 39 Gew.-% Kunstharzdispersion und 16 bis 40 Gew.-%, vorzugsweise 20 bis 36 Gew.-% feinteiliger Füllstoff sowie 25 bis 60 Gew.-%, vorzugsweise 28 bis 56 Gew.-% grobkörniger Füllstoff enthalten sind.

4. Bodenbeschichtungsmischung nach einem der Ansprüche 1 bis 3, wobei 0,15 bis 1,5 Gew.-%, vorzugsweise 0,2 bis 1 Gew.-% des Haftvermittlers enthalten sind.

5. Bodenbeschichtungsmischung nach einem der Ansprüche 1 bis 4, wobei es sich bei dem feinteiligen Füllstoff um einen quarzitischen Füllstoff handelt.

6. Bodenbeschichtungsmischung nach Anspruch 5, wobei der feinteilige Füllstoff Quarzmehl ist.

7. Bodenbeschichtungsmischung nach einem der Ansprüche 1 bis 6, wobei der grobkörnige Füllstoff eine Korngröße von 0,6 bis 2,2 mm, vorzugsweise von 0,7 bis 2 mm aufweist.

8. Bodenbeschichtungsmischung nach einem der Ansprüche 1 bis 7, wobei der grobkörnige Füllstoff Sand ist.

## Revendications

1. Mélange pour revêtement de sol composé d'au moins une dispersion aqueuse de résine synthétique, d'au moins une charge à éléments fins d'une grosseur de grain allant jusqu'à 500 µm, d'au moins une charge à gros grains d'une grosseur de grain supérieure à 0,6 mm, et d'un agent d'adhérence, l'agent d'adhérence étant constitué par au moins une substance du groupe "silane, siloxane, silicone" et le mélange pour revêtement de sol contenant moins de 2 % en poids de ciment.

2. Mélange pour revêtement de sol selon la revendication 1, la dispersion de résine synthétique étant une dispersion contenant de l'acrylate, et/ou au moins une dispersion du groupe "dispersion styrène-butadiène, dispersion contenant du propionate de vinyle, dispersion contenant de l'acétate de vinyle".

3. Mélange pour revêtement de sol selon la revendication 1 ou 2, contenant 20 à 45 % en poids, de préférence 22 à 39 % en poids de dispersion de résine synthétique et 16 à 40 % en poids, de préférence 20 à 36 % en poids de charge à éléments fins ainsi que 25 à 60 % en poids, de préférence 28 à 56 % en poids de charge à gros grains.

4. Mélange pour revêtement de sol selon l'une des revendications 1 à 3, contenant 0,15 à 1,5 % en poids, de préférence 0,2 à 1 % en poids d'agent d'adhérence.

5. Mélange pour revêtement de sol selon l'une des revendications 1 à 4, la charge à éléments fins étant constituée par une charge quartzitique.

6. Mélange pour revêtement de sol selon la revendication 5, la charge à éléments fins étant constituée par de la poudre de quartz.

7. Mélange pour revêtement de sol selon l'une des revendications 1 à 6, la charge à gros grains présentant une grosseur de grain de 0,6 à 2,2 mm, de préférence de 0,7 à 2 mm.

8. Mélange pour revêtement de sol selon l'une des revendications 1 à 7, la charge à gros grains étant constituée par du sable.

## Claims

1. A floor coating composition made of at least an aqueous resin dispersion, at least a fine-particle filler material with a grain size of up to 500 µm, at least a coarse-grained filler material with a grain size larger than 0.6 mm, and an adhesive agent, wherein the adhesive agent is at least a substance from the group "silane, siloxane, silicon," wherein the floor coating composition contains less than 2 wt.-% of cement.

2. The floor coating composition according to claim 1, wherein the resin dispersion is a dispersion containing acrylate, and/or at least a dispersion from the group "styrol butadiene dispersion, vinyl propionate containing dispersion, vinyl acetate containing dispersion."

3. The floor coating composition according to claims 1 or 2, wherein it contains 20 to 45 wt.-%, preferably 22 to 39 wt.-% of a resin dispersion, and 16 to 40 wt.-%, preferably 20 to 36 wt.-% of a fine-particle filler material, as well as 25 to 60 wt.-%, preferably 28 to 56 wt.-% of a coarse-grained filler material.

4. The floor coating composition according to one of the claims 1 to 3, wherein it contains 0.15 to 1.5 wt.-%, preferably 0.2 to 1 wt.-% of the adhesive agent.

5. The floor coating composition according to one of the claims 1 to 4, wherein the fine-particle filler material is a quartzitic filler material.

6. The floor coating composition according to claim 5, wherein the fine-particle filler material is quartz flour.

7. The floor coating composition according to one of the claims 1 to 6, wherein the coarse grained filler material has a grain size of 0.6 to 2.2 mm, preferably of 0.7 to 2 mm.

8. The floor coating composition according to one of the claims 1 to 7, wherein the coarse-grained filler material is sand.
